# EUROPÄISCHE PATENTSCHRIFT

(11) **EP 3 714 018 B1**
(45) Veröffentlichungstag und Bekanntmachung des Hinweises auf die Patenterteilung: **22.06.2022**
(21) Anmeldenummer: 18759290.2
(22) Anmeldetag: 22.08.2018
(51) Int. Cl.: C09J 7/21, H02G 3/04

(54) **ORANGE-FÄRBUNG TEXTILER TRÄGER UNTER BERÜCKSICHTIGUNG ÜBERGANGSMETALLBASIERTER PIGMENTE**
ORANGE COLORING OF TEXTILE SUPPORTS TAKING INTO CONSIDERATION TRANSITION METAL-BASED PIGMENTS
COLORATION ORANGE DE SUPPORTS TEXTILES AVEC PRISE EN COMPTE DES PIGMENTS À BASE DE MÉTAUX DE TRANSITION

(30) Priorität: 24.11.2017 DE 202017107156 U
(43) Veröffentlichungstag der Anmeldung: 30.09.2020
(73) Patentinhaber: Certoplast Technische Klebebänder GmbH, 42285 Wuppertal (DE)
(72) Erfinder: LEERMANN, Timo, 42369 Wuppertal (DE); RAMBUSCH, René, 42113 Wuppertal (DE)
(74) Vertreter: Andrejewski - Honke Patent- und Rechtsanwälte Partnerschaft mbB
(86) Internationale Anmeldenummer: PCT/EP2018/072652
(87) Internationale Veröffentlichungsnummer: WO 2019/101377

(56) Entgegenhaltungen:
- EP-A1- 1 932 892
- EP-A2- 0 992 558
- DE-A1- 10 150 453
- US-A- 6 040 255
- Welsch Norbert ET AL: "Azofarbstoffe", Römpp online, 1 March 2006 (2006-03-01), pages 1-4, XP055879037, Retrieved from the Internet: URL:https://roempp.thieme.de/lexicon/RD-01 -04146?context=megacomplete#/ [retrieved on 2022-01-14]

## Beschreibung

Die Erfindung betrifft ein Klebeband, gemäß Anspruch 1.

Die Einfärbung von textilen Trägern bei Klebebändern erfolgt seit Jahren, wobei man in der Historie unter anderem mit anorganischen Pigmenten auf beispielsweise Rußbasis gearbeitet hat, die als Zusatz in einem Extrudat Berücksichtigung gefunden haben. Aus dem Extrudat lassen sich beispielsweise Filamente und ein Filamentgewebe herstellen. Nähere Einzelheiten zu den eingesetzten anorganischen Pigmenten werden nicht angegeben (vgl. WO 03/033611 A1).

Bei einem anderen Klebeband gemäß der EP 2 546 317 A1 erfolgt das Einfärben des textilen Trägers durch eine Mischung aus Farbstoffen und/oder Pigmenten. Die Mischung selbst setzt sich aus gelben und roten Farbstoffen bzw. Pigmenten zusammen. Der gelbe Farbstoff basiert auf Anthrachinon, während der rote Farbstoff aus einer Azo-Verbindung besteht. Alternativ hierzu kann es sich bei dem roten Farbstoff aber auch um eine Mischung von Anthrachinon-Verbindungen und Azo-Verbindungen handeln.

Wie üblich bezeichnet der Begriff "Farbstoff" ausweislich der Erläuterungen bei "Römpp Chemie Lexikon, 9. Auflage, 1993, Seite 1301" einen Sammelbegriff oder eine Sammelbezeichnung für in Lösungsmittel und/oder Bindemitteln lösliche Farbmittel. Den Farbstoffen stehen also die unlöslichen Pigmente gegenüber, die den Farbstoffen in Anzahl, Strukturvielfalt und meist auch an Leuchtkraft unterlegen sind.

Als Pigmente werden entsprechend den Erläuterungen bei "Römpp Chemie Lexikon, 9. Auflage, 1995, Seite 3439" im Anwendungsmedium praktisch unlösliche anorganische oder organische bunte oder unbunte Farbmittel verstanden. Dementsprechend ist im Folgenden zwischen Farbstoffen einerseits und Pigmenten andererseits entsprechend diesen Definitionen zu unterscheiden.

Der nächstliegende Stand der Technik ist durch die EP 1 932 892 A1 bekannt geworden. Hier geht es um ein Klebeband mit einem Vliesträger, wobei der Vliesträger eingelagerte Pigmente aufweisen kann. Tatsächlich werden als Pigmente Ruß oder auch Eisenoxide eingesetzt und können auch Farbstoffe Verwendung finden.

Durch die US 6 040 255 A ist ein textiles Flächengebilde bekannt geworden, welches auch als Autoabdeckung zum Einsatz kommt. Zur Abschwächung der Sonneneinwirkung kann das textile Flächengebilde mit gelben anorganischen Pigmenten eingefärbt werden.

Im Rahmen der DE 101 50 453 A1 geht es um ein Klebeband, bei dem der Träger ein Gewebe, Vlies oder dergleichen Flächengebilde sein kann. Außerdem wird die Möglichkeit angesprochen, durch den Zusatz von anorganischen Pigmenten in ein Extrudat den Träger färben zu können.

Ein technisches Klebeband mit einem bandförmigen textilen gefärbten Träger ist schließlich Gegenstand der EP 1 607 459 A1. Dabei besteht der textile

Träger im Einzelnen aus spinndüsengefärbten Fäden oder Fasern. Meistens erfolgt eine Schwarzfärbung unter Rückgriff auf rußbasierende Stoffe.

Der Einfärbung von Klebebändern respektive der Einfärbung ihres Trägers durch Farbstoffe kommt eine zunehmende Bedeutung zu. Denn beim Einsatz solcher Klebebänder als Wickelbänder zur Ummantelung von Kabeln in Automobilen wird zunehmend gefordert, dass diese Wickelbänder neben ihrer eigentlichen Funktion zur Zusammenfassung und Bündelung der Kabel eine ergänzende Warn- oder Hinweisfunktion übernehmen.

So ist es bei beispielsweise Hybrid- und Elektroautos bekannt, dass alle Kabel bzw. Kabelbündel, an denen Spannungen größer als 60 Volt anliegen, durch einen orangefarbenen Farbton gekennzeichnet werden müssen. Hier wurde im Jahr 2010 der Farbton RAL2003 (Pastell-Orange) als Standard Farbton vorgegeben. Diesem Umstand trägt unter anderem die EP 2 546 317 A1 dadurch Rechnung, dass die zuvor bereits angesprochene Mischung aus gelben Pigmenten und roten Pigmenten zum Einsatz kommt, wobei die gelben Pigmente auf Anthrachinon und die roten Pigmente auf einer Azo-Verbindung basieren.

Die bekannte Vorgehensweise nach der EP 2 546 317 A1 ist nicht frei von Mängeln. So besteht bei den bekannten organischen Farbstoffen nach wie vor das Problem, dass es aufgrund von Wärmeeinwirkung und/oder durch Alterungserscheinungen zu einer Entfärbung bzw. zu einem Verblassen der Einfärbung und folglich des Trägers und damit des Klebebandes insgesamt kommt. Das ist besonders auf langen Zeitskalen insofern nachteilig, als hierdurch der Warneffekt verringert bzw. in Verbindung mit unvermeidlichen Verschmutzungen in diesem Bereich sogar gänzlich verschwinden kann. Hier setzt die Erfindung ein.

Der Erfindung liegt das technische Problem zugrunde, ein derartiges Klebeband und insbesondere Wickelband zur Ummantelung von Kabeln in Automobilen so weiterzuentwickeln, dass insbesondere die Langzeit- und Temperaturstabilität verbessert sind sowie ein andauernder Warneffekt realisiert werden kann.

Zur Lösung dieser technischen Problemstellung schlägt die Erfindung bei einem gattungsgemäßen Klebeband und insbesondere Wickelband zur Ummantelung von Kabeln in Automobilen vor, dass der Farbstoff als Mischung aus gelben anorganischen mineralischen Pigmenten und roten organischen Pigmenten ausgebildet ist, wobei es sich bei den roten organischen Pigmenten um solche aus der Klasse der Perylene handelt.

Bei den erfindungsgemäß vorgesehenen anorganischen mineralischen Pigmenten, die den Farbstoff ganz oder teilweise bilden, handelt es sich vorteilhaft um solche der Mineralklasse der Oxide und Hydroxide. Alternativ oder zusätzlich können als anorganische mineralische Pigmente solche der Mineralklasse der Phosphate, Arsenate oder Vanadate zum Einsatz kommen. Die Klassifizierung und Bezeichnung der Mineralklassen erfolgt dabei in Übereinstimmung mit der "Systematik der Minerale" nach Strunz (8. Auflage).

Als Pigmente der Mineralklasse der Oxide und Hydroxide werden im Allgemeinen Pyrochlore oder Rutile eingesetzt. Tatsächlich kristallisieren Pyrochlore in der Regel im kubischen Kristallsystem und bilden häufig oktaedrische Kristalle mit brauner, roter, oranger oder auch gelblicher Farbe. Bei Rutilen handelt es sich um Minerale, die in der Regel im tetragonalen Kristallsystem kristallisieren.

Ganz besonders bevorzugt werden als Pyrochlore oder Rutile metallbasierte Pyrochlore oder Rutile eingesetzt und hier insbesondere übergangsmetallbasierte Pyrochlore oder Rutile. Das heißt, an dieser Stelle kommen die fraglichen Minerale, das heißt Pyrochlore oder Rutile derart zum Einsatz, dass in ihr Kristallgitter Übergangsmetalle eingebaut sind, beispielsweise solche auf Basis von Niob oder auch Zink. Das heißt, als übergangsmetallbasierte Pyrochlore oder Rutile kommen bevorzugt solche auf Niob-Zinn oder Zinn-Zink Basis zum Einsatz.

Als Pigmente der Mineralklasse der Phosphate, Arsenate oder Vanadate kommen besonders vorteilhaft Klinobisvanite zum Einsatz. Solche Klinobisvanite fallen in die Gruppe der wasserfreien Phosphate ohne fremde Anionen und verfügen typischerweise über eine gelbe bis orange-gelbe Farbe. Bevorzugt weist das anorganische mineralische Pigment insgesamt eine gelbe Farbe auf.

Auf diese Weise macht sich die Erfindung zunächst einmal zunutze, dass solche anorganischen mineralischen Pigmente aufgrund ihrer Kristallstruktur typischerweise über eine hohe Temperaturstabilität verfügen und darüber hinaus eine hohe Farbechtheit besitzen. Das lässt sich auf die besondere Struktur und Stabilität der an dieser Stelle eingesetzten Kristalle bzw. Mineralien zurückführen. Tatsächlich sind die fraglichen Pigmente und damit hergestellte Träger bzw. Klebebänder bei einer Prüfung entsprechend der Norm LV 312 ("Schutzsysteme für Leitungssätze in Kraftfahrzeugen, Klebebänder; Prüfrichtlinie" (10/2009)) über eine Dauer von 3000 Stunden temperaturstabil, und zwar unter Berücksichtigung von Temperaturen, die weit über 150° C liegen, im Regelfall sogar 200° C oder sogar 250° C betragen können. Das heißt, unter Berücksichtigung der erfindungsgemäß eingesetzten anorganischen mineralischen Pigmente als Farbstoff für den Träger wird zumindest die Temperaturklasse T4 entsprechend der Norm LV 312 erreicht, wie dies prinzipiell in der zuvor bereits in Bezug genommenen EP 2 546 317 A1 erläutert wird.

Beispiele für geeignete anorganische mineralische Pigmente in Gestalt von unter anderem Niob-Zinn-Pyrochlor (Niobium Tin Pyrochlore; NTP) werden unter anderem von der Firma "The Shepard Color Company" angeboten und in gelber Farbe zur Verfügung gestellt. Ergänzend wird hierzu auf die US 8 192 541 B2 Bezug genommen.

Als weiteres geeignetes Pigment aus der Klasse der Rutile hat sich das sogenannte "Pigment Yellow 53, Nickeltitanat" als besonders günstig erwiesen. Bei Pyrochloren arbeitet man beispielhaft mit "Pigment Yellow 227" und bei Klinobisvaniten beispielhaft mit "Pigment Yellow 184, Bismutvanadat". Die zuvor genannten Pigmente werden beispielsweise von der Firma Habich GmbH aus A-3652 Leiben unter der Kennzeichnung "Duropal" angeboten.

Dabei ist der Farbstoff erfindungsgemäß als Mischung aus gelben anorganischen mineralischen Pigmenten und roten organischen Pigmenten ausgebildet, wobei es sich bei den roten organischen Pigmenten um solche aus der Klasse der Perylene handelt.

Der gelbe Farbstoff kann auf Basis anorganischer mineralischer Pigmente unter Rückgriff beispielhaft auf ein gelbes Niob-Zinn-Pyrochlor-Mineral realisiert werden. Während die anorganischen mineralischen Pigmente in gelber Farbe vorliegen und eingesetzt werden, finden zusätzlich rote organische Pigmente Verwendung, bei deren Farbstoff es sich um eine Mischung aus den gelben anorganischen mineralischen Pigmenten und den roten organischen Pigmenten handelt. Dabei werden roteorganische Pigmente aus der Klasse der Perylene eingesetzt.

In jedem Fall lässt sich mit Hilfe des auf diese Weise realisierten Farbstoffes als Mischung aus den gelben anorganischen mineralischen Pigmenten und den roten organischen Pigmenten insgesamt eine Orange-Färbung des Trägers und damit des Klebebandes erreichen. Insbesondere lässt sich die für die zuvor beschriebenen Anwendungen erforderliche Farbe RAL 2003 (Pastell-Orange) vorgeben und einstellen.

Die Färbung des Trägers kann dabei grundsätzlich im Sinne einer Spinndüsenfärbung erfolgen, also dergestalt, dass der Farbstoff einem Extrudat zugegeben und bei der Extrusion in die hierdurch hergestellten Fasern eindringt sowie auf diese Weise für ihre Einfärbung sorgt.

Bei der bevorzugt eingesetzten Spinndüsenfärbung wird dabei so vorgegangen, dass der Farbstoff bzw. die Pigmente im Regelfall eine Korngröße von weniger als 0,5 mm, insbesondere um weniger als 100 µm und vorzugsweise von weniger als 50 µm aufweisen. Außerdem hat es sich für die Mischung aus den anorganischen mineralischen Pigmenten mit den organischen Pigmenten als günstig erwiesen, wenn das Mischungsverhältnis im Bereich von 20 zu 80 bis 80 zu 20 Masseanteilen der anorganischen zu den organischen Pigmenten angesiedelt ist. Schließlich wird so vorgegangen, dass die Pigmente im Extrudat bei der Spinndüsenfärbung meistens in einer Konzentration von 0,2 bis 3,0 Masse-%, bezogen auf die polymere Spinnmasse, vorhanden sind und dann zusammen mit der polymeren Spinnmasse extrudiert werden.

Daneben ist auch eine sogenannte Stückfärbung grundsätzlich möglich, indem der Träger beispielsweise in einer Dispersion eingefärbt wird. Die Färbung kann dabei aus einer wässrigen Lösung der Pigmente heraus unter gegebenenfalls zusätzlichem Rückgriff auf Hilfsmittel erfolgen, wie dies grundsätzlich in der EP 2 546 317 A1 in diesem Zusammenhang beschrieben wird. Im Allgemeinen greift die Erfindung jedoch auf eine Spinndüsenfärbung zurück.

Der Träger ist zumindest teilweise aus Polyester-, Polypropylen, Polyethylen- oder Polyamidfasern aufgebaut. Ganz besonders bevorzugt setzt sich der Träger vollständig aus Polyesterfasern zusammen. Hier haben sich grundsätzlich jedwede Arten an textilen Trägern als günstig erwiesen, beispielsweise ein Vlies, ein Gewebe oder auch ein Gelege. Daneben sind auf diese Weise grundsätzlich auch mehrschichtige Träger beispielsweise aus einem Vlies oder Gewebe denkbar und können in der beschriebenen Art und Weise hergestellt und eingefärbt werden.

Das Gewicht des Trägers kann im Regelfall bis zu 200 g/m² und vorzugsweise sogar bis zu 500 g/m² betragen. Für die Klebemasse bzw. die auf diese Weise realisierte Klebstoffschicht wird im Allgemeinen ein Auftragsgewicht im Bereich von 20 g/m² bis 200 g/m² als besonders günstig angesehen.

Für die Realisierung der Klebeschicht empfiehlt die Erfindung Klebemassen auf Basis von Naturkautschuk oder auf Synthesekautschuk. Ganz besonders bevorzugt sind Klebemassen auf Acrylatbasis und hier insbesondere Acrylatschmelzhaftklebemassen, die beispielsweise UV-vernetzt werden können.

Das auf diese Weise realisierte Klebeband wird besonders vorteilhaft als Wickelband zur Ummantelung von Kabeln in Automobilen eingesetzt. Dazu wird das fragliche Wickelband um die langgestreckten Kabel wendeiförmig herumgeführt. Grundsätzlich kann auf diese Weise aber auch eine axiale Schutzummantelung für die fraglichen Kabel realisiert werden. In diesem Fall erfolgt das Ummanteln der langgestreckten Kabel in axialer Richtung mithilfe des Klebebandes bzw. einer auf diese Weise realisierten Schutzummantelung.

## Patentansprüche

1. Klebeband, insbesondere Wickelband zur Ummantelung von Kabeln in Automobilen, mit einem textilen Träger sowie mindestens einer ein- oder beidseitig auf den Träger aufgebrachten Klebeschicht, wobei der Träger durch einen Farbstoff eingefärbt ist, und wobei als Farbstoff ganz oder teilweise anorganische mineralische Pigmente eingesetzt werden,
**dadurch gekennzeichnet, dass**
der Farbstoff als Mischung aus gelben anorganischen mineralischen Pigmenten und roten organischen Pigmenten ausgebildet ist, wobei es sich bei den roten organischen Pigmenten um solche aus der Klasse der Perylene handelt.

2. Klebeband nach Anspruch 1, **dadurch gekennzeichnet, dass** es sich bei den anorganischen mineralischen Pigmenten um solche der Mineralklasse der Oxide und Hydroxide und/oder solche der Mineralklasse der Phosphate, Arsenate oder Vanadate handelt.

3. Klebeband nach Anspruch 2, **dadurch gekennzeichnet, dass** als Pigmente der Mineralklasse der Oxide und Hydroxide Pyrochlore oder Rutile eingesetzt werden.

4. Klebeband nach Anspruch 2 oder 3, **dadurch gekennzeichnet, dass** als Pigmente der Mineralklasse der Phosphate, Arsenate oder Vanadate Klinobisvanite eingesetzt werden.

5. Klebeband nach einem der Ansprüche 1 bis 4, **dadurch gekennzeichnet, dass** einzelne Fäden des textilen Trägers mit dem Farbstoff eingefärbt sind.

6. Klebeband nach einem der Ansprüche 1 bis 5, **dadurch gekennzeichnet, dass** der Träger zumindest teilweise aus Polyester-, Polypropylen-, Polyethylen- oder Polyamidfasern besteht.

7. Klebeband nach einem der Ansprüche 1 bis 6, **dadurch gekennzeichnet, dass** es sich bei der Klebebeschichtung um eine Klebemasse auf Basis von Naturkautschuk, Synthesekautschuk, Acrylat und vorzugsweise um eine Acrylatschmelzhaftklebemasse handelt.

## Claims

1. Adhesive tape, in particular wrapping tape for sheathing cables in automobiles, with a textile carrier and at least one adhesive layer applied to one or both sides of the carrier, wherein the carrier is coloured by a dye, and wherein inorganic mineral pigments make up some or all of the dye,
**characterized in that**
the dye is created as a mixture of yellow inorganic mineral pigments and red organic pigments, wherein the red organic pigments are those from the class of perylenes.

2. Adhesive tape according to Claim 1, **characterized in that** the inorganic mineral pigments are those from the oxide and hydroxide mineral class and/or those from the mineral class of phosphates, arsenates or vanadates.

3. Adhesive tape according to Claim 2, **characterized in that** pyrochlore or rutile are used as pigments of the oxide and hydroxide mineral class.

4. Adhesive tape according to Claim 2 or 3, **characterized in that** clinobisvanites are used as pigments of the mineral class of phosphates, arsenates or vanadates.

5. Adhesive tape according to any one of Claims 1 to 4, **characterized in that** individual threads of the textile carrier are coloured with the dye.

6. Adhesive tape according to any one of Claims 1 to 5, **characterized in that** the carrier is made at least partly from fibres of polyester, polypropylene, polyethylene or polyamide.

7. Adhesive tape according to any one of Claims 1 to 6, **characterized in that** the adhesive coating is an adhesive cement produced on the basis of natural rubber, synthetic rubber, acrylate, and is preferably a hotmelt pressure-sensitive acrylate adhesive.

## Revendications

1. Bande adhésive, en particulier bande d'enroulement pour envelopper des câbles dans le secteur automobile, avec un support textile ainsi qu'au moins une couche adhésive appliquée sur un ou deux côtés sur le support, sachant que le support est teinté par un colorant et sachant que des pigments minéraux entièrement ou en partie inorganiques sont utilisés comme colorant,
**caractérisée en ce que**
le colorant est constitué sous la forme d'un mélange de pigments minéraux inorganiques jaunes et de pigments organiques rouges, sachant qu'en ce qui concerne les pigments organiques rouges, il s'agit de pigments de la catégorie du pyralène.

2. Bande adhésive selon la revendication 1, **caractérisée en ce qu'**en ce qui concerne les pigments inorganiques minéraux, il s'agit de pigments de la catégorie minérale des oxydes et hydroxydes et/ou de pigments de la catégorie minérale des phosphates, des arséniates ou des vanadates.

3. Bande adhésive selon la revendication 2, **caractérisée en ce que** des pyrochlores ou des rutiles sont utilisés en tant que pigments de la catégorie minérale des oxydes et hydroxydes.

4. Bande adhésive selon la revendication 2 ou 3, **caractérisée en ce que** des clinobisvanites sont utilisées en tant que pigments de la catégorie minérale des phosphates, des arséniates ou des vanadates.

5. Bande adhésive selon l'une quelconque des revendications 1 à 4, **caractérisée en ce que** les différents fils du support textile sont teintés avec le colorant.

6. Bande adhésive selon l'une quelconque des revendications 1 à 5, **caractérisée en ce que** le support est composé au moins en partie de fibres de polyester, de polypropylène, de polyéthylène ou de polyamide.

7. Bande adhésive selon l'une quelconque des revendications 1 à 6, **caractérisée en ce qu'**en ce qui concerne le revêtement adhésif, il s'agit d'une masse adhésive à base de caoutchouc naturel, de caoutchouc synthétique, d'acrylate et de préférence d'une masse adhésive fusible d'acrylate.
